# EUROPEAN PATENT APPLICATION

(11) **EP 4 738 073 A1**
(43) Date of publication of application: **06.05.2026**
(21) Application number: 24857961.7
(22) Date of filing: 18.06.2024
(51) Int. Cl.: G06F 3/01, G06F 9/451

(54) **DISPLAY METHOD IN SCREEN-OFF MODE AND APPARATUS**

(30) Priority: 29.08.2023 CN 202311112182; 08.09.2023 CN 202311167861
(71) Applicant: Huawei Technologies Co., Ltd., Shenzhen, Guangdong 518129 (CN)
(72) Inventor: LIU, Xuezhi, Shenzhen, Guangdong 518129 (CN); LIU, Anqi, Shenzhen, Guangdong 518129 (CN)
(74) Representative: Isarpatent
(86) International application number: PCT/CN2024/099880
(87) International publication number: WO 2025/044416

(57) **Abstract**

A display method and apparatus in a screen-off mode are provided. The method includes: An electronic device enters the screen-off mode, and displays a screen-off display object on a display in the screen-off mode; the electronic device determines an orientation of a human face or a human eye based on human face or human eye detection, where the orientation is associated with a relative position between the human face or the human eye and the electronic device; and the electronic device dynamically changes the screen-off display object based on a change of the orientation of the human face or the human eye, thereby achieving a dynamic interaction effect between the screen-off display object and a user.

## Description

### CROSS-REFERENCE TO RELATED APPLICATIONS

This application claims priorities to Chinese Patent Application No. 202311112182.7, filed with the China National Intellectual Property Administration on August 29, 2023 and entitled "INTERACTION METHOD AND ELECTRONIC DEVICE IN SCREEN-OFF STATE", and to Chinese Patent Application No. 202311167861.4, filed with the China National Intellectual Property Administration on September 8, 2023 and entitled "DISPLAY METHOD AND APPARATUS IN SCREEN-OFF MODE", both of which are incorporated herein by reference in their entireties.

### TECHNICAL FIELD

This application relates to human-computer interaction technologies, and more specifically, to a display method and apparatus in a screen-off mode.

### BACKGROUND

Intelligent devices are increasingly widely used due to the ability to provide diverse and intelligent services. A smartphone is a type of intelligent device. The smartphone has an independent operating system and independent running space, allowing a user to install software, games, navigation, and other applications provided by a third-party service provider, and can implement wireless network access via a mobile communication network.

With popularization of the intelligent devices, users have increasingly higher requirements for human-computer interaction. Therefore, how to improve human-computer interaction to enhance user experience is a technical problem that needs to be resolved currently.

### SUMMARY

This application provides a display method and apparatus in a screen-off mode, enabling an electronic device to generate good interaction experience with a user even in the screen-off mode.

According to a first aspect, this application provides a display method in a screen-off mode, applied to an electronic device having a display. The method may include the following steps: The electronic device enters the screen-off mode, and displays a screen-off display object on the display in the screen-off mode; determines an orientation of a human face or a human eye based on human face or human eye detection, where the orientation is associated with a relative position between the human face or the human eye and the electronic device; and dynamically changes the screen-off display object based on a change of the orientation of the human face or the human eye.

In the foregoing implementation, in the screen-off mode, the screen-off display object may be dynamically changed based on the change of the orientation of the human face or the human eye. Therefore, a dynamic interaction effect between the screen-off display object and a user can be achieved.

In a possible implementation, the screen-off display object includes a first component, and the first component represents an eye; and dynamically changing the screen-off display object based on the change of the orientation of the human face or the human eye includes: when the orientation of the human face changes, changing the first component based on the change, so that a display position or a line-of-sight direction of changed first component matches the orientation of the human face or the human eye.

In the foregoing implementation, in the screen-off mode, the screen-off display object may dynamically change with the change of the orientation of the human face/human eye, achieving an interaction effect that a line of sight of the screen-off display object follows the user.

Optionally, the first component includes an eyeball in the eye; and changing the first component based on the change includes: changing a display position of the eyeball in the eye based on the change.

In a possible implementation, the screen-off display object includes a second component, and the second component represents an emotion; and the method further includes: determining, based on human face or human eye detection, an emotion presented by the human face or the human eye, and updating the second component, so that the emotion presented by the screen-off display object matches the emotion presented by the human face or the human eye.

In the foregoing implementation, in the screen-off mode, the screen-off display object dynamically changes with a change of the emotion presented by the human face/human eye, achieving an interaction effect that the emotion presented by the screen-off display object follows the emotion of the user.

Optionally, determining, based on human face or human eye detection, the emotion presented by the human face or the human eye includes: performing human face or human eye detection by using an artificial intelligence AI capability, to determine the emotion presented by the human face or the human eye.

In a possible implementation, the change of the orientation of the human face or the human eye includes: the human face or the human eye changes from a first orientation to a second orientation; and dynamically changing the screen-off display object based on the change of the orientation of the human face or the human eye includes: playing a first animation, where the first animation includes N frames, N is an integer greater than 1, and each of the N frames includes the screen-off display object; and in the N frames, a display state of the screen-off display object in a first frame matches the first orientation, a display state of the screen-off display object in a last frame matches the second orientation, and a display state of the screen-off display object in a second frame to an (N-1)^{th} frame matches a middle orientation in a transition process from the first orientation to the second orientation.

In a possible implementation, the screen-off display object includes a three-dimensional object; and dynamically changing the screen-off display object based on the change of the orientation of the human face or the human eye includes: when the orientation of the human face or the human eye changes, changing an orientation of the three-dimensional object accordingly, so that a changed orientation of the three-dimensional object matches the orientation of the human face or the human eye.

In the foregoing implementation, in the screen-off mode, the orientation of the screen-off display object dynamically changes with the change of the orientation of the human face/human eye, achieving an interaction effect that the screen-off display object is always oriented towards the user. In addition, because the screen-off display object is a three-dimensional object, a naked-eye 3D visual effect can be achieved.

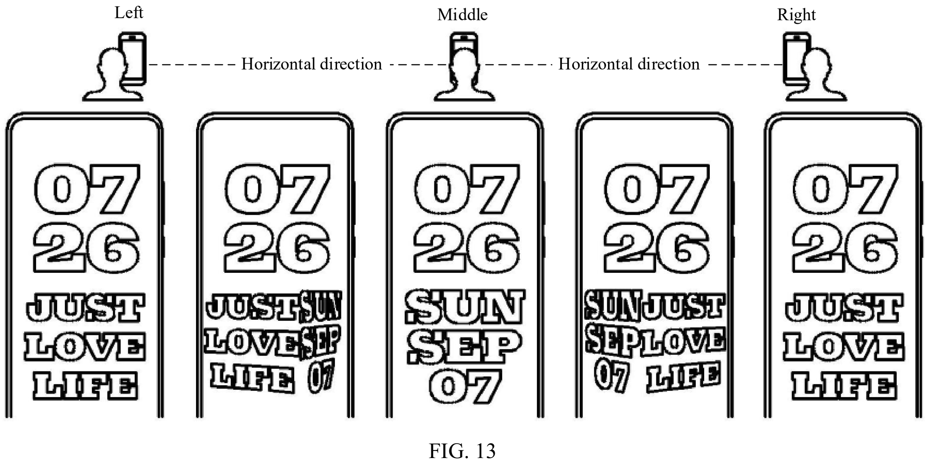

In a possible implementation, the screen-off display object includes a rotatable text object, the text object is used to display at least two texts, and when the text object is rotated, a part of the at least two texts is displayed and/or a part of the at least two texts is hidden; and dynamically changing the screen-off display object based on the change of the orientation of the human face or the human eye includes: when the orientation of the human face or the human eye changes, rotating the text object to present a hidden text. In some embodiments, a text before the rotation is different from a text presented after the rotation. For this, refer to the example in FIG. 13.

In the foregoing implementation, in the screen-off mode, the text object may display different text content based on the change of the orientation of the human face/human eye, achieving an interaction effect with the user.

Optionally, when the orientation of the human face or the human eye changes, rotating the text object to present the hidden text includes: when the orientation of the human face or the human eye is a first orientation, rotating the text object in a direction opposite to the first orientation to present the hidden text.

Optionally, the text object is a three-dimensional object, a first text is displayed on a first surface of the three-dimensional object, and a second text is displayed on a second surface of the three-dimensional object; and when the orientation of the human face or the human eye changes, rotating the text object to present the hidden text includes: when the orientation of the human face or the human eye changes from the first orientation to a second orientation, rotating the text object from a first angle to a second angle; or when the orientation of the human face or the human eye changes from the second orientation to the first orientation, rotating the text object from the second angle to the first angle, where the first surface of the text object is displayed at the first angle, and the second surface of the text object is displayed at the second angle.

In a possible implementation, the text object is displayed in a hollow-out effect, and a part of an image of desktop wallpaper of the electronic device is exposed from a hollow-out part of the text object; and the method further includes: in response to an unlock operation, switching from the screen-off mode to a screen-on mode by using a one-shot visual effect, and displaying a desktop and the desktop wallpaper of the electronic device.

In a possible implementation, the method further includes: obtaining information detected by the electronic device by using a front-facing camera or a first sensor; and performing human face or human eye detection based on the detected information.

In a possible implementation, the change of the orientation of the human face or the human eye is caused by a movement of the user or a movement of the electronic device.

According to a second aspect, this application provides a display method in a screen-off mode, applied to an electronic device having a display, and including: The electronic device enters the screen-off mode; when it is detected that a human eye gazes at the display, displays a screen-off display object on the display in the screen-off mode; determines an orientation of a human face or the human eye based on human face or human eye detection, where the orientation is associated with a relative position between the human face or the human eye and the electronic device; and dynamically changes the screen-off display object based on a change of the orientation of the human face or the human eye.

In the foregoing implementation, in the screen-off mode, the screen-off display object is displayed only when it is detected that the human eye gazes at the display, thereby reducing power consumption of the electronic device. In addition, the screen-off display object may be dynamically changed based on the change of the orientation of the human face or the human eye. Therefore, a dynamic interaction effect between the screen-off display object and a user can be achieved.

For another implementation of the second aspect, refer to the first aspect. Details are not described again.

According to a third aspect, an apparatus is provided, including a memory, a processor, and a display apparatus, where the memory is configured to store a computer program, and the processor is configured to read the computer program, to enable the apparatus to implement the method according to any one of the first aspect or the second aspect.

According to a fourth aspect, a computer-readable storage medium is provided, where the computer-readable storage medium stores a computer program, and when the computer program is executed by a computer, the computer is enabled to implement the method according to any one of the first aspect or the second aspect.

According to a fifth aspect, a computer program product is provided, including computer-readable instructions, where when the computer program product runs on a computer, the computer is enabled to perform the method according to any one of the first aspect or the second aspect.

According to a sixth aspect, a chip is provided, where the chip includes a processor and a data interface, and the processor reads, through the data interface, instructions stored in a memory, to perform the method according to any one of the first aspect or the second aspect.

### BRIEF DESCRIPTION OF DRAWINGS

FIG. 1 is a diagram of an emoticon according to an embodiment of this application;
FIG. 2 is a diagram of a naked-eye 3D object according to an embodiment of this application;
FIG. 3 is a diagram of a text object according to an embodiment of this application;
FIG. 4 is a diagram of enabling a screen-off display function and setting a screen-off display object according to an embodiment of this application;
FIG. 5 is a diagram of several orientations of a human face according to an embodiment of this application;
FIG. 6 is a diagram of a hardware structure of an electronic device according to an embodiment of this application;
FIG. 7 is a diagram of a software architecture of an electronic device according to an embodiment of this application;
FIG. 8 is an interaction diagram in which an emoticon in a screen-off mode dynamically changes with a user position change in Scenario 1 according to an embodiment of this application;
FIG. 9(a) to FIG. 9(d) are an interaction diagram in which an emoticon in a screen-off mode dynamically changes with a user emotion change in Scenario 2 according to an embodiment of this application;
FIG. 10 is an interaction diagram in which an emoticon in a screen-off mode dynamically changes with a user position change and a user emotion change in Scenario 3 according to an embodiment of this application;
FIG. 11 is an interaction diagram in which a naked-eye 3D object in a screen-off mode dynamically changes with a user expression change in Scenario 4 according to an embodiment of this application;
FIG. 12 is a diagram of an entrance animation of a naked-eye 3D object in Scenario 4 according to an embodiment of this application;
FIG. 13 is a diagram in which a cube in a screen-off mode dynamically changes with a user position change to display text content on different surfaces of the cube in Scenario 5 according to an embodiment of this application;
FIG. 14 is a diagram of switching from a screen-off mode to a screen-on mode in Scenario 5 according to an embodiment of this application;
FIG. 15 is a diagram of another text object dynamically changing with a user position change in Scenario 5 according to an embodiment of this application;
FIG. 16 is a schematic flowchart of a display method in a screen-off mode according to an embodiment of this application;
FIG. 17 is a schematic flowchart of another display method in a screen-off mode according to an embodiment of this application; and
FIG. 18 is a diagram of a structure of an apparatus according to an embodiment of this application.

### DESCRIPTION OF EMBODIMENTS

Terms used in the following embodiments are merely intended to describe specific embodiments, but are not intended to limit this application. Terms "one", "a", "the", "the foregoing", "this", and "the one" of singular forms used in this specification and the appended claims of this application are also intended to include expressions such as "one or more", unless otherwise specified in the context clearly. It should be further understood that in the following embodiments of this application, "at least one" and "one or more" mean one, two, or more. The term "and/or" describes an association relationship between associated objects and indicates that three relationships may exist. For example, A and/or B may indicate the following cases: Only A exists, both A and B exist, and only B exists, where A and B may be singular or plural. The character "/" generally indicates an "or" relationship between the associated objects.

Reference to "one embodiment", "some embodiments", or the like described in this specification means that a specific feature, structure, or characteristic described with reference to the embodiment is included in one or more embodiments of this application. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner. The terms "include", "have", and their variants all mean "include but are not limited to", unless otherwise specifically emphasized in another manner.

To better understand this application, the following first briefly describes some technologies and technical terms in this application.

### (1) Always on display (always on display, AOD)

The AOD is a function that allows an electronic device to display useful thumbnail information. Even when a display of the electronic device is turned off (that is, the electronic device enters a screen-off mode, or enters a screen-off state), basic information (for example, a clock, a calendar, a notification, or a call) may be displayed in a row in a minimized form, so that a user can view the basic information in the most convenient manner anytime and anywhere in a case of low power consumption. In other words, in the screen-off mode, the display of the electronic device may display information such as time and a notification to a limited extent.

In the screen-off mode, some pixels on the display of the electronic device are lit up to display information such as a clock and a notification. Compared with a case in which the entire display is lit up to display information such as a clock and a notification, this can reduce power consumption.

The AOD technology allows the electronic device to display a specific amount of information in the screen-off mode. Therefore, the AOD is also referred to as screen-off display (or off-screen display).

In embodiments of this application, content that can be displayed in the screen-off mode is referred to as a screen-off display object, or may be referred to as an always-on-display object or an AOD object. A name of the object is not limited in embodiments of this application.

In the screen-off mode, one or more screen-off display objects may be displayed. The screen-off display object may be preset. The user may view a preset type, display manner, and the like of the screen-off display object in a setting interface, and may select a screen-off display object that is expected to be displayed in the screen-off mode. The screen-off display object may alternatively be generated based on a picture selected by the user or a text input by the user, so that a more personalized screen-off display object can be obtained.

For example, in embodiments of this application, a type and a setting manner of the screen-off display object may include:
- Basic information. For example, information such as time, a date, an SMS message, and an incoming call notification may be included. The user may be allowed to select whether to display basic information or not. The user may be further allowed to select a display manner of the basic information. For example, the display manner of the basic information may include tap to display (that is, the basic information is displayed when a screen is touched), scheduled display, and always on display.
- Picture. The picture may include a static picture, or may include a dynamic picture. A plurality of pictures may be built in the electronic device for selection by the user. Optionally, the electronic device may further generate a personalized picture (for example, a personalized static picture or a personalized dynamic picture) based on a picture selected by the user or an editing operation on the picture, and use the personalized picture as the screen-off display object. Optionally, the electronic device may further allow the user to select a picture from a gallery of the electronic device, and generate the screen-off display object based on the picture. In addition, the screen-off display object may further include an animation including a plurality of pictures.
- Emoticon. A plurality of emoticons may be built in the electronic device for selection by the user. Optionally, the electronic device may further allow the user to use an emoticon downloaded from a network side or an emoticon obtained in another manner. This is not limited in embodiments of this application.

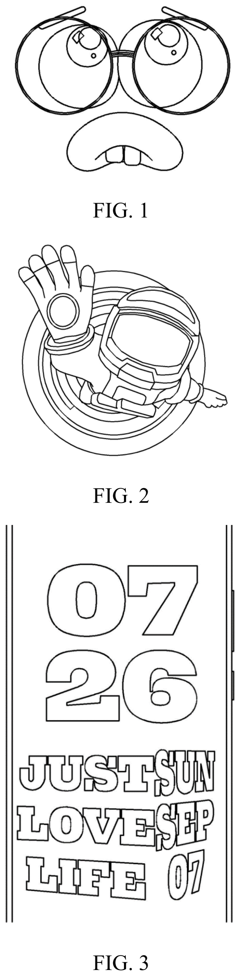

One emoticon may include a plurality of parts. For example, an emoticon may include an object representing an eye, an object representing a mouth, and the like. FIG. 1 shows an example of an emoticon, and the emoticon includes parts such as eyes, glasses, and a mouth. In another embodiment, a screen-off interface may alternatively display a plurality of different emoticons at the same time. In this application, to distinguish from the screen-off display object, a part included in the screen-off display object is referred to as a component below. For example, for the emoticon shown in FIG. 1, an object representing the eye in the emoticon is referred to as an eye component or a first component, an object representing the mouth in the emoticon is referred to as a mouth component or a second component, and the rest may be deduced by analogy.

In some embodiments of this application, the electronic device may allow the user to construct (or build) a personalized emoticon of the user. For example, some components for constructing an emoticon may be preset in the electronic device, and the user may select these components to construct a personalized emoticon. For example, a plurality of styles of eyes, a plurality of styles of noses, and a plurality of styles of mouths are preset in the electronic device. The user may select one style of eye, nose, and mouth from the plurality of styles, and perform some personalized settings or editing, to generate a personalized emoticon.
- Virtual image. Similar to the emoticon, the user may select a virtual image built in the electronic device, or a virtual image obtained in another manner, or a personalized virtual image designed or edited by the user. One virtual image may include one or more components.

It may be understood that the virtual image in this embodiment of this application may include an image such as a person. This is not limited in this embodiment of this application.
- Signature information. A plurality of types of signature information and display manners (for example, including a font and a color) may be built in the electronic device for selection by the user. Optionally, the electronic device may further generate, based on signature content input by the user and a selected display manner, a personalized signature of the user as the screen-off display object.

Optionally, an embodiment of this application further provides a screen-off display object. The screen-off display object has a naked-eye 3D display effect, and is referred to as a naked-eye 3D object in this specification. FIG. 2 shows an example of a naked-eye 3D object. The naked-eye 3D object is displayed as a 3D "spaceman".

Optionally, an embodiment of this application further provides a screen-off display object referred to as a "text object". A plurality of texts may be displayed by using the text object, and the displayed texts may include signature information, a date, weather, time, and the like. It may be understood that a name of the text object is not limited in this embodiment of this application. The following uses the text object as an example for description.

The text object may be presented in different states, and different text may be displayed in different states. In one state, a part of the texts may be displayed, and a part of the texts may be hidden. In a possible implementation, the text object is a three-dimensional polyhedron, and different surfaces of the three-dimensional polyhedron may be used to display different text content. FIG. 3 is an example of a diagram of displaying a plurality of pieces of text content by using a three-dimensional cube. The figure shows only text content displayed on two surfaces of the three-dimensional cube, where one of the surfaces is used to display a date (for example, "SUN SEP 07" shown in the figure), and another surface is used to display a personalized signature (for example, "JUST LOVE LIFE" shown in the figure).

In some other embodiments of this application, other information may be further displayed on the surface of the three-dimensional polyhedron, for example, weather may be displayed. This is not limited in this embodiment of this application.

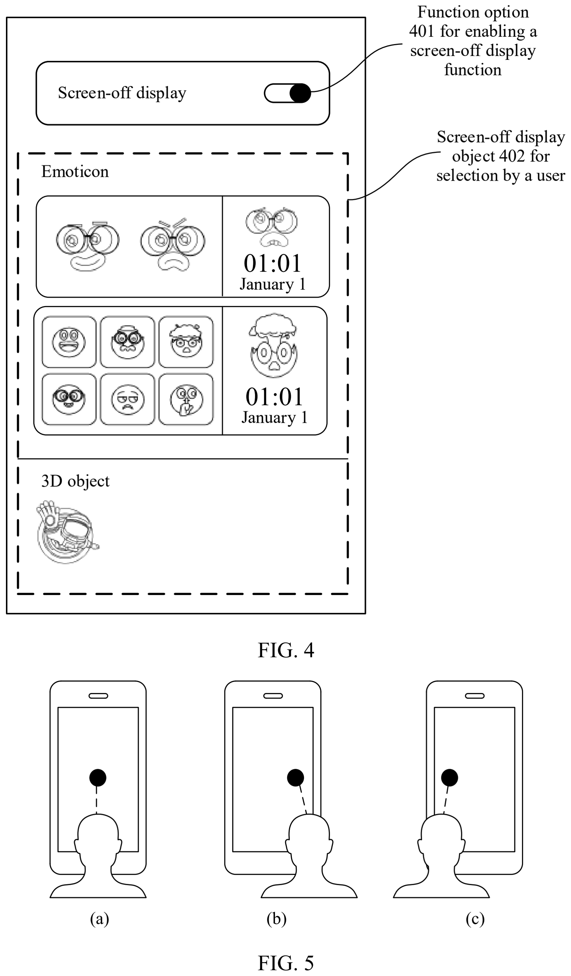

In this embodiment of this application, the electronic device allows the user to enable or disable a screen-off display function and may further allow the user to set a screen-off display object. For example, FIG. 4 is a diagram of a user interface in which a user enables a screen-off display function and sets a screen-off display object according to an embodiment of this application. As shown in FIG. 4, the user interface includes a screen-off display function option 401, and the user may enable or disable the screen-off display function by tapping the function option. The user interface further provides a plurality of screen-off display objects (for example, content displayed in a dashed-line box 402 area in the figure) such as an emoticon and a naked-eye 3D object for selection by the user. It may be understood that the foregoing merely shows examples of several screen-off display objects and setting manner of the screen-off display objects. A type and a setting manner of the screen-off display object are not limited in this embodiment of this application.

### (2) Eyes on display (eyes on display, EOD)

In an implementation, the EOD technology means that AOD display is lit up only when the electronic device detects that an eye of the user gazes at the display. Otherwise, the AOD display is not lit up. In other words, when detecting that the eye of the user gazes at the display, the electronic device displays the screen-off display object on the display. When the electronic device fails to detect, within a specified period of time, that glasses of the user gaze at the display (for example, when the electronic device is placed in a pocket or a schoolbag), the electronic device disables the screen-off display, to reduce power consumption of the device.

The EOD function may also be considered as a type of AOD function.

### (3) Human face detection (face detection)

Human face detection refers to searching any given image by using a specific policy (or referred to as an algorithm) to determine whether the image includes a human face, and if the image includes the human face, a position, a size, a posture, and the like of the human face are further determined.

Optionally, the following human face detection methods may be used in this embodiment of this application.

Knowledge rule-based method: A method for performing human face detection on an input image according to a human face rule (for example, a distribution rule of an eye, a nose, and a mouth). This type of method mainly uses some simple rules to describe facial features of the human face and relationships between these features.

Invariant feature-based method: Human face detection is performed on an input image by searching for invariant facial features of the human face. This type of method considers that some facial features of the human face (such as skin tone, edge, and texture) have a characteristic of remaining unchanged in different postures, angles, and expressions.

Template matching-based method: A facial feature of a human face is described by using a standard face template. During human face detection, a correlation value between an input image sub-window and the standard face template is first calculated, and then the obtained correlation value is compared with a preset threshold, to determine whether the human face exists in the input image.

Statistical model-based method: A human face area is considered as a type of pattern, and a large amount of human face data is used as a sample for training to learn potential rules and construct a classifier. The classifier is used to implement human face detection by determining all possible area pattern attributes in an image. This type of method may be implemented based on artificial intelligence (artificial intelligence, AI), for example, human face detection is implemented via a neural network.

It may be understood that the foregoing merely shows several human face detection methods as examples. The human face detection method is not limited in this embodiment of this application.

In some embodiments of this application, the electronic device may capture information by using an apparatus or a component disposed on the electronic device, and then perform human face detection based on the captured information by using a human face detection algorithm. Optionally, the apparatus or component may be a front-facing camera disposed on the electronic device, and the electronic device may perform human face detection based on an image captured by the front-facing camera. The apparatus or component may alternatively be another type of sensor, for example, may be an infrared detection sensor. This is not limited in this embodiment of this application.

In some embodiments of this application, the electronic device may determine an orientation of a human face based on human face detection, where the orientation of the human face is associated with a relative position between the human face and the electronic device. That the orientation of the human face is associated with the relative position between the human face and the electronic device may be understood as follows: The orientation of the human face may reflect or represent the relative position between the human face and the electronic device, or the relative position between the human face and the electronic device may be determined based on the orientation of the human face.

Optionally, a position of the human face in the image may be obtained by using the human face detection algorithm, and the position may be specifically an offset of the human face relative to a central position of the image. The orientation of the human face may be determined based on the position of the human face in the image, and the orientation may reflect the relative position between the human face and the electronic device. For example, the following several possible cases may be included.

Case 1: A reference point on the human face (for example, a central point of the human face, a position of a nose tip on the human face, or a central point between eyes on the human face) is located in a central area of the image, where the central area may be, for example, a central point of the image, or may be a smaller area that uses a central point of the image as a circle center and uses a specified length as a radius. In this case, it may be determined that the human face directly faces the display of the electronic device, or the human face does not deviate leftward, rightward, downward, or upward for the display.

Case 2: The reference point on the human face is located in the left area of the central area of the image. In this case, it may be determined that the human face is on the left side of the display of the electronic device, or the human face deviates leftward from the display.

Case 3: The reference point on the human face is located in the right area of the central area of the image. In this case, it may be determined that the human face is on the right side of the display of the electronic device, or the human face deviates rightward from the display.

Case 4: The reference point on the human face is located in the upper area of the central area of the image. In this case, it may be determined that the human face is on the upper side of the display of the electronic device, or the human face deviates upward from the display.

Case 5: The reference point on the human face is located in the lower area of the central area of the image. In this case, it may be determined that the human face is on the lower side of the display of the electronic device, or the human face deviates downward from the display.

Further, an offset of the human face relative to the display of the electronic device may be further determined based on the offset of the human face in the image.

FIG. 5 is a diagram of orientations of the human face in several cases. As shown in (a) in FIG. 5, the head of the user is located at the central position relative to the display of the electronic device, and a black dot on the display represents an orientation of the human face of the user. For another example, as shown in (b) in FIG. 5, the head of the user is located on the right side relative to the display of the electronic device, and a black dot on the display represents an orientation of the human face of the user. For another example, as shown in (c) in FIG. 5, the head of the user is located on the left side relative to the display of the electronic device, and a black dot on the display represents an orientation of the human face of the user.

It may be understood that the foregoing merely shows several possible relative positions between the human face and the electronic device as examples. This is not limited in this embodiment of this application. Based on the foregoing principle, the position of the human face in the image may be determined based on human face detection information, and the relative position of the human face to the electronic device (or the display of the electronic device) is determined based on the position.

In some other embodiments of this application, a rotation angle of the human face may be obtained by using the human face detection algorithm. Correspondingly, the rotation angle of the human face relative to the electronic device (or the display of the electronic device) may be determined based on the rotation angle of the human face. The rotation angle may include one or more of the following: a rotation angle in a horizontal dimension, a rotation angle in a vertical dimension, and a rotation angle in a depth of field dimension.

In some other embodiments of this application, a depth of field of the human face may be obtained by using the human face detection algorithm. Correspondingly, a distance between the human face and the electronic device (or the display of the electronic device) may be determined based on the depth of field of the human face.

In some other embodiments of this application, an expression of the human face may be obtained by using the human face detection algorithm, and an emotion presented by the human face may be further determined based on the expression of the human face. For example, the emotion may include happiness, sadness, anger, and the like. The human face detection algorithm may determine an expression of the human face based on details of the human face, for example, a form of the facial features (for example, an opening/closing state of the eye or the mouth) and a relative position of the facial features.

Based on the foregoing descriptions of the human face detection algorithm, it may be understood that in this embodiment of this application, one or more of the following may be determined by using the human face detection algorithm: the position offset of the human face relative to the display of the electronic device, the rotation angle of the human face relative to the display of the electronic device, the depth of field of the human face relative to the display of the electronic device, the expression of the human face, and the like.

Similar to human face detection, a position offset of the human eye relative to the display of the electronic device, a rotation angle of the human eye relative to the display of the electronic device, a depth of field of the human eye relative to the display of the electronic device, and an expression of the human eye relative to the display of the electronic device may be obtained through human eye detection (for example, information such as a spacing between two eyes, a position of a central point between the two eyes, and a state of the two eyes). In the following of this application, human face detection or human eye detection is expressed as "human face/human eye detection".

### (4) Eyeball tracking

The eyeball tracking technology is mainly used to study acquisition, modeling, and simulation of eyeball motion information. Eyeball tracking may include tracking based on a feature change of an eyeball and a periphery of the eyeball, or tracking based on an iris angle change, or tracking by actively projecting a beam such as an infrared ray to an iris to extract a feature. A device for implementing eyeball tracking may include an infrared device, an image capture device, and the like. For example, for a color or gray image captured by the image capture device, eyeball tracking may be implemented by using a pattern recognition algorithm such as template matching, projection, or a neural network.

In some embodiments of this application, whether the human eye gazes at the display of the electronic device may be determined through eyeball tracking. When it is determined that the human eye gazes at the display of the electronic device, the AOD display may be performed.

In some other embodiments of this application, a line of sight of the human eye may be determined through eyeball tracking, or a change of the line of sight of the human eye may be determined.

In some other embodiments of this application, a state of the human eye may be obtained through eyeball tracking, and an expression of the human face may be determined based on the state of the human eye.

In a related technology, after the AOD display is lit up, the screen-off display object is displayed on the display of the electronic device. If the screen-off display object is a static object (for example, a static picture or text), the screen-off display object is always displayed as static on the display. If the screen-off display object is a dynamic object (for example, a dynamic picture), the screen-off display object on the display is displayed in a static state after dynamic display is completed, and an animation effect of the screen-off display object is preset. In other words, in the related technology, regardless of whether the screen-off display object is static or dynamic, the screen-off display object does not generate an interaction effect with the user.

To improve interaction in the screen-off mode, embodiments of this application provide a display method in the screen-off mode and a related apparatus that can implement the method. In this embodiment of this application, in the screen-off mode, the electronic device may determine the orientation of the human face/human eye relative to the display of the electronic device based on human face/human eye detection, so that the screen-off display object can be dynamically displayed based on the orientation of the human face/human eye relative to the display of the electronic device, thereby providing the user with use experience of dynamically interacting with the screen-off display object based on the change of the orientation of the human face/human eye relative to the display of the electronic device.

The following describes in detail embodiments of this application with reference to accompanying drawings.

A method provided in embodiments of this application may be applied to an electronic device. The electronic device may implement human-computer interaction. For example, the electronic device may be specifically a terminal device having a display function, for example, a non-foldable mobile phone, a foldable mobile phone, a wearable device (such as a smartwatch or a smart band), a tablet computer, a notebook computer, a smart screen, a vehicle-mounted terminal, a computing machine, a computer, a personal computer (personal computer, PC), an ultra-mobile personal computer (ultra-mobile personal computer, UMPC), a netbook, a personal digital assistant (personal digital assistant, PDA), a virtual reality (virtual reality, VR) device/augmented reality (augmented reality, AR) device, or an artificial intelligence (artificial intelligence, AI) device. An operating system installed in the electronic device includes but is not limited to iOS^{®}, Android^{®}, HarmonyOS^{®}, Windows^{®}, Linux^{®}, or another operating system. A specific type of the electronic device and the installed operating system are not limited in this application.

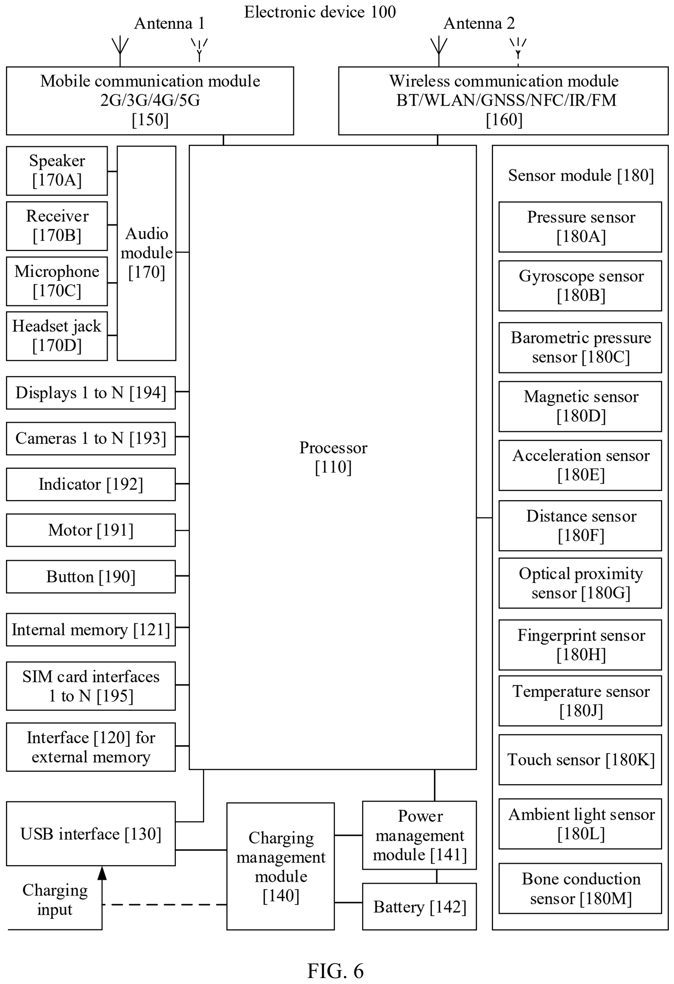

FIG. 6 is a possible hardware structure of an electronic device 100 according to an embodiment of this application. The electronic device may perform the method provided in embodiments of this application. The electronic device 100 may include a processor 110, an interface 120 for external memory, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identity module (subscriber identification module, SIM) card interface 195, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, a display processing unit (display processing unit, DPU), and/or a neural-network processing unit (neural-network processing unit, NPU). Different processing units may be independent components, or may be integrated into one or more processors. In some embodiments, the electronic device 100 may alternatively include one or more processors 110. The processor may be a nerve center and a command center of the electronic device 100. The processor may generate an operation control signal based on instruction operation code and a time sequence signal, to complete control of instruction reading and instruction execution. A memory may be further disposed in the processor 110, and is configured to store instructions and data.

The camera 193 may include one camera or a group of cameras. The camera 193 may include a front-facing camera and a rear-facing camera.

The sensor module 180 may include one or more of the following: a pressure sensor 180A, a gyroscope sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, a vibration sensor, and an infrared detection sensor.

The electronic device 100 may implement a display function through the GPU, the display 194, the application processor AP, and the like. The display 194 is configured to display an image, a video, and the like.

The electronic device 100 may implement an audio function, for example, music playing and recording, through the audio module 170, the speaker 170A, the receiver 170B, the microphone 170C, the headset jack 170D, the application processor, and the like.

It may be understood that the structure shown in embodiments of this application does not constitute a specific limitation on the electronic device 100. In some other embodiments of this application, the electronic device 100 may include more or fewer components than those shown in the figure, or some components may be combined, or some components may be split, or different component arrangements may be used. The components shown in the figure may be implemented as hardware, software, or a combination of software and hardware.

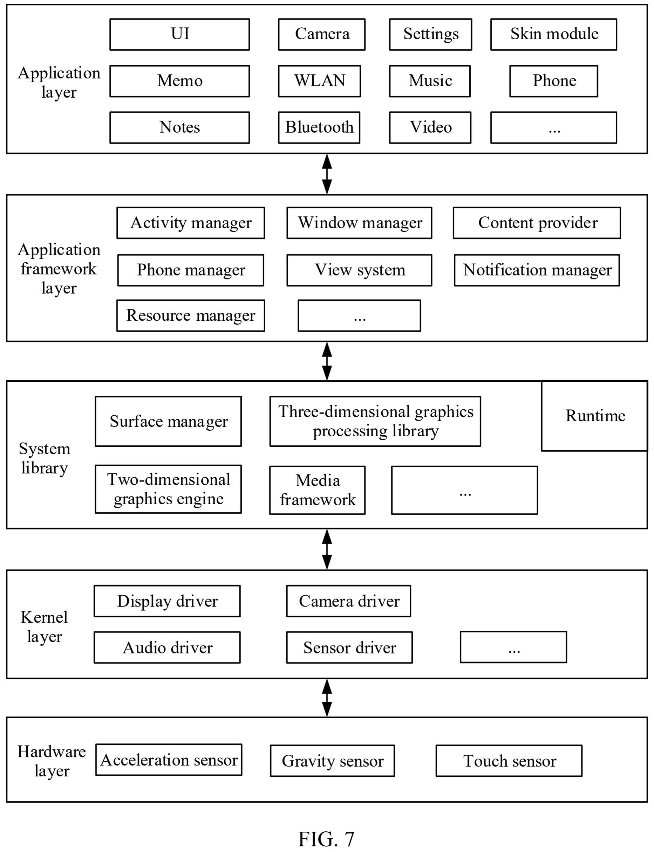

FIG. 7 is a block diagram of a software system architecture of an electronic device according to an embodiment of this application. For example, as shown in FIG. 7, the software system architecture of the electronic device may be a layered architecture. For example, software may be divided into several layers, and the layers communicate with each other through a software interface. In some embodiments, an operating system is divided into five layers: an application layer, an application framework (framework, FWK) layer, a runtime and system library, a kernel layer, and a hardware layer from top to bottom.

The application layer may include a series of application packages. As shown in FIG. 7, the application layer may include Camera, Settings, Skin module, a user interface (user interface, UI), a third-party application, and the like. The third-party application may include a wireless local area network (wireless local area network, WLAN), Music, Phone, Bluetooth, Video, Memo, Notes, and the like.

In a possible implementation, an application may be developed by using a Java language, and is completed by invoking an application programming interface (application programming interface, API) provided by the application framework layer. A developer may interact with a bottom layer (for example, the hardware layer and the kernel layer) of the operating system through the application framework layer, to develop an application of the developer. The application framework layer mainly includes a series of services and management systems of the operating system.

The application framework layer provides an application programming interface and a programming framework for an application at the application layer. The application framework layer includes some predefined functions. As shown in FIG. 7, the application framework layer may include an activity manager, a window manager, a content provider, a view system, a phone manager, a resource manager, a notification manager, and the like.

The activity manager is configured to: manage a life cycle of each application, provide a common navigation rollback function, and provide an interaction interface for windows of all programs.

The window manager is configured to manage a window program. The window manager may obtain a size of the display, determine whether there is a status bar, perform screen locking, take a screenshot, and the like. The content provider is configured to: store and obtain data, and enable the data to be accessed by an application. The data may include a video, an image, audio, calls that are made and received, a browsing history and bookmarks, an address book, and the like.

The view system includes visual controls, such as a text display control and a picture display control. The view system may be configured to construct an application. A display interface may include one or more views. For example, a display interface including an SMS message notification icon may include a text display view and a picture display view.

The phone manager is configured to provide a communication function of the electronic device, for example, management of a call status (including answering, hang-up, or the like).

The resource manager provides various resources such as a localized string, an icon, a picture, a layout file, and a video file for an application.

The notification manager enables an application to display notification information in a status bar, and may be configured to convey a notification message. The notification manager may automatically disappear after a short pause without requiring user interaction. For example, the notification manager is configured to notify download completion, give a message notification, and the like. The notification manager may alternatively be a notification that appears in a top status bar of the system in a form of a graph chart or a scroll bar text, for example, a notification of an application that runs on a background, or may be a notification that appears on the screen in a form of a dialog window. For example, text information is prompted in the status bar, an alert tone is made, the electronic device vibrates, or the indicator blinks.

A runtime includes a core library and a virtual machine. The runtime schedules and manages an operating system. The core library includes two parts: a function that needs to be invoked in Java language, and a core library of the operating system. The application layer and the application framework layer run on the virtual machine. The virtual machine executes java files of the application layer and the application framework layer as binary files. The virtual machine is configured to implement functions such as object life cycle management, stack management, thread management, security and exception management, and garbage collection.

The system library may include a plurality of functional modules, for example, a surface manager, a media framework, a three-dimensional graphics processing library (for example, OpenGL ES), and a two-dimensional graphics engine (for example, SGL). The surface manager is configured to manage a display subsystem and provide fusion of two-dimensional and three-dimensional graphics layers for a plurality of applications. The media framework supports playback and recording of audios and videos in a plurality of commonly used formats, static image files, and the like. The media framework may support a plurality of audio and video coding formats such as MPEG-4, H.264, MP3, AAC, AMR, JPG, and PNG. The three-dimensional graphics processing library is configured to implement three-dimensional graphics drawing, image rendering, composition, layer processing, and the like. The two-dimensional graphics engine is a drawing engine for two-dimensional drawing. In some embodiments, the three-dimensional graphics processing library may be configured to draw a three-dimensional motion trajectory image, and the two-dimensional graphics engine may be configured to draw a two-dimensional motion trajectory image.

The kernel layer is a layer between hardware and software. The kernel layer includes at least a display driver, a camera driver, an audio driver, and a sensor driver.

The hardware layer may include various sensors such as an acceleration sensor, a gravity sensor, and a touch sensor.

It should be understood that the hardware structure of the electronic device may be shown in FIG. 6, and the software system architecture of the electronic device may be shown in FIG. 7. A software program and/or a module corresponding to the software system architecture of the electronic device may be stored in the internal memory 121. The processor 110 may run the software program and the application stored in the internal memory 121, to perform a procedure of the display method provided in embodiments of this application.

In addition to the foregoing examples, the method provided in this application may be further applied to another type of software system, for example, a HarmonyOS operating system, a Windows operating system, or an iOS operating system.

In the display method in the screen-off mode provided in this embodiment of this application, after entering the screen-off mode, the electronic device displays the screen-off display object on the display in the screen-off mode. The electronic device performs human face/human eye detection, to determine the orientation of the human face/human eye, where the orientation is related to the relative position between the electronic device and the human face/human eye. The electronic device may dynamically change the screen-off display object based on the change of the orientation of the human face/human eye, to implement a dynamic interaction effect.

It should be understood that the screen-off display object may be always displayed, or may be displayed only when it is detected that the human eye of the user gazes at the screen (or the human face is detected).

To better understand the display method in the screen-off mode provided in this embodiment of this application, the following first uses several possible scenarios as examples to describe a human-computer interaction behavior and an interface change on the electronic device side in this embodiment of this application.

### Scenario 1

In Scenario 1, the emoticon shown in FIG. 1 is used as an example to describe an interaction scenario in which the emoticon displayed on the display in the screen-off mode dynamically changes with a user position change.

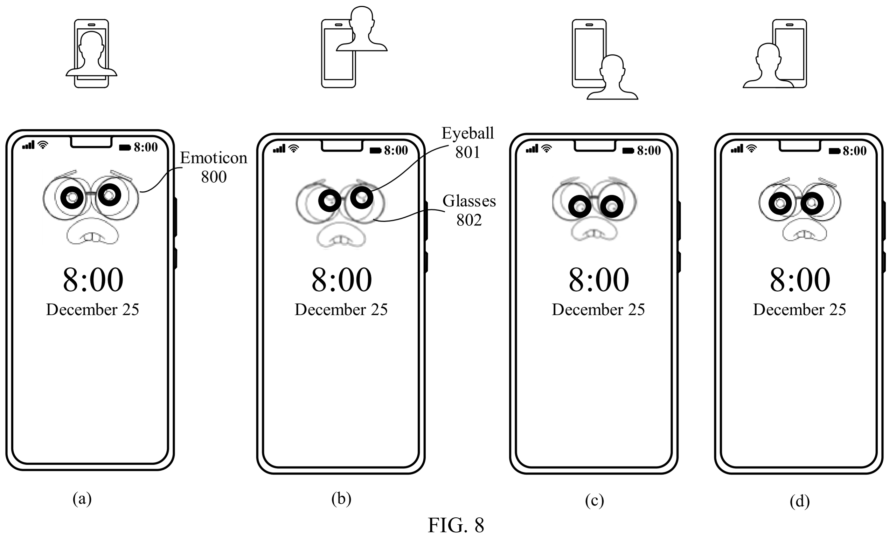

Refer to (a) in FIG. 8. The electronic device is currently in the screen-off mode. After a front-facing camera disposed on the electronic device captures an image, the electronic device performs human face/human eye detection on the image, to determine that the human face/human eye is located at a central position of the image. In this case, the human face/human eye is located at the central position relative to the display. Therefore, positions of eyeballs 801 and glasses 802 in the emoticon 800 on the display match current positions of the human face/human eye. As shown in the figure, the eyeball 801 is located at a middle position of eyes, achieving an effect that a line of sight of the emoticon 800 gazes at the user.

Refer to (b) in FIG. 8. After the head of the user moves to the right, the front-facing camera disposed on the electronic device captures an image, and the electronic device performs human face/human eye detection on the image, to determine that the human face/human eye is located at a position on the right of the center of the image. In this case, the human face/human eye is located at the position on the right of the center relative to the display. Therefore, the positions of the eyeballs 801 and the glasses 802 in the emoticon 800 on the display deviate rightward, and match current positions of the human face/human eye, achieving an effect that the line of sight of the emoticon 800 follows the user position and always gazes at the user.

Refer to (c) in FIG. 8. After the head of the user continues to move downward, the front-facing camera disposed on the electronic device captures an image, and the electronic device performs human face/human eye detection on the image, to determine that the human face/human eye is located at a lower-right position of the center of the image. In this case, the human face/human eye is located at the lower-right position of the center relative to the display. Therefore, positions of the eyeballs 801 and the glasses 802 in the emoticon 800 on the display deviate downward, and match current positions of the human face/human eye, achieving an effect that the line of sight of the emoticon 800 follows the user position and always gazes at the user.

The head of the user continues to move. Correspondingly, positions of the eyeballs 801 and the glasses 802 in the emoticon 800 change with a user position change. For details, refer to (d) in FIG. 8.

Optionally, when the positions of the eyeballs 801 and the glasses 802 change with the user position change, position change degrees (for example, displacement magnitudes and/or angles) of the eyeballs 801 and the glasses 802 may be different. For example, displacement of the eyeballs 801 may be greater than displacement of the glasses 802, to implement a more natural and realistic dynamic display effect. This is not limited in this embodiment of this application.

Optionally, if no human face/human eye is detected based on the image captured by the front-facing camera, the electronic device may maintain a state of an emoticon displayed last time (or a last time before a current moment), or may display a default state of the emoticon, for example, a state of the emoticon in (a) in FIG. 8 may be set to a default state.

### Scenario 2

In Scenario 2, the emoticon shown in FIG. 1 is used as an example to describe an interaction scenario in which the emoticon displayed on the display in the screen-off mode dynamically changes with a user emotion change.

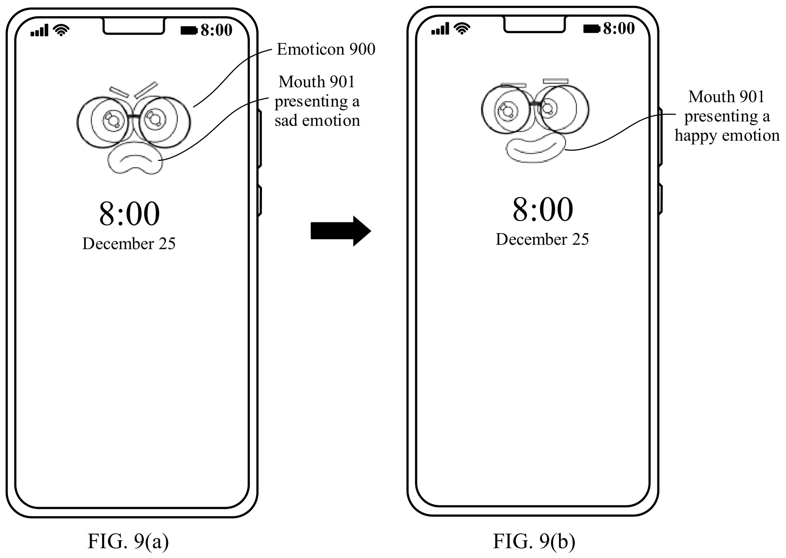

Refer to FIG. 9(a). The electronic device is currently in the screen-off mode. After a front-facing camera disposed on the electronic device captures an image, the electronic device performs human face/human eye detection on the image, to determine that an emotion presented by the human face is sadness. The electronic device displays a mouth 901 in the emoticon 900 as bending downward to present a sad emotion, so that the emotion presented by the emoticon 900 matches the current emotion presented by the human face.

Refer to FIG. 9(b). After the emotion of the user changes from sadness to happiness, in this case, the front-facing camera disposed on the electronic device captures an image, and the electronic device determines, through human face detection on the image, that the emotion presented by the human face is happiness. The electronic device displays the mouth 901 in the emoticon 900 as bending upward to present a happy emotion, so that the emotion presented by the emoticon 900 dynamically changes with the user emotion change, and always matches the user emotion, thereby establishing an emotional state connection with the user.

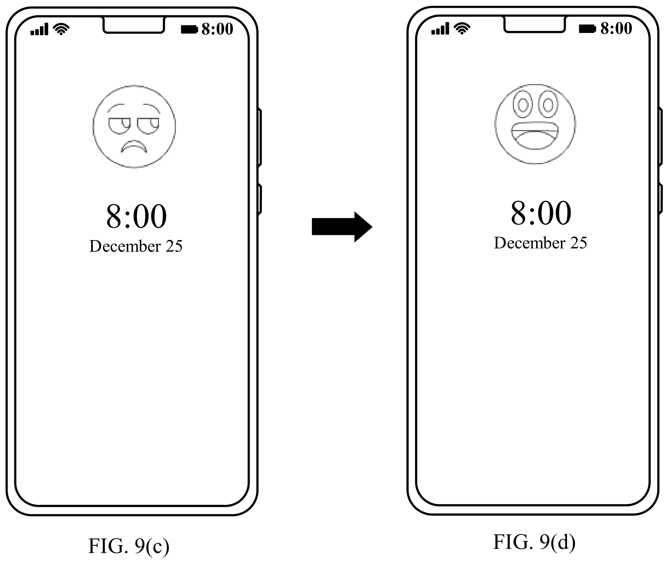

FIG. 9(c) and FIG. 9(d) show an effect of a dynamic change from sadness to happiness by another emoticon following the emotion presented by the human face of the user.

In another embodiment, if it is detected that the current emotion presented by the human face is sadness, the mouth 901 in the emoticon 900 may be displayed as bending upward to present a happy emotion, in other words, the emotion presented by the emoticon may be different from (for example, opposite to) the current emotion presented by the human face, thereby achieving an effect of improving the emotion of the user or pleasing the user.

Optionally, if no human face/human eye is detected based on the image captured by the front-facing camera, the electronic device may maintain a state of an emoticon displayed last time (or a last time before a current moment), or may display a default state of the emoticon, for example, a state in which the emoticon is presented as a happy emotion may be set to the default state.

### Scenario 3

In Scenario 3, the emoticon shown in FIG. 1 is used as an example to describe an interaction scenario in which the emoticon displayed on the display in the screen-off mode dynamically changes with a user position change and a user emotion change.

An implementation of Scenario 3 may be understood as combining the implementation of Scenario 1 with the implementation of Scenario 2. In other words, through human face/human eye detection, the orientation of the human face/human eye can be determined, and also the emotion presented by the human face can be determined. Correspondingly, the matched emoticon can be displayed based on the orientation and the expression of the human face/human eye. Therefore, on the one hand, the line of sight of the emoticon follows the position of the user to achieve the effect of always gazing at the user, and on the other hand, the emotion presented by the emoticon dynamically changes with the user emotion change and always matches the emotion of the user.

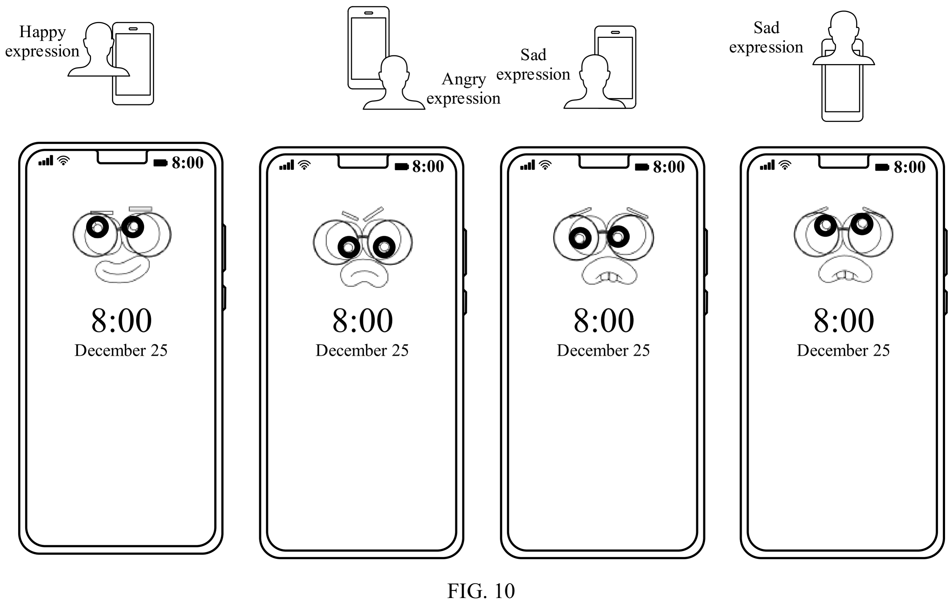

For example, FIG. 10 is a diagram of a dynamic change of the emoticon displayed on the display of the electronic device in a process in which a relative position between the user and the display of the electronic device changes and the emotion of the user also changes. FIG. 10 shows an orientation of the human face of the user and an expression presented by the human face at this time, and correspondingly, shows a display effect of the emoticon on the display.

### Scenario 4

In Scenario 4, the naked-eye 3D object shown in FIG. 2 is used as an example to describe an interaction scenario in which the naked-eye 3D object displayed on the display in the screen-off mode dynamically changes with a user position change. The naked-eye 3D object has a three-dimensional display effect.

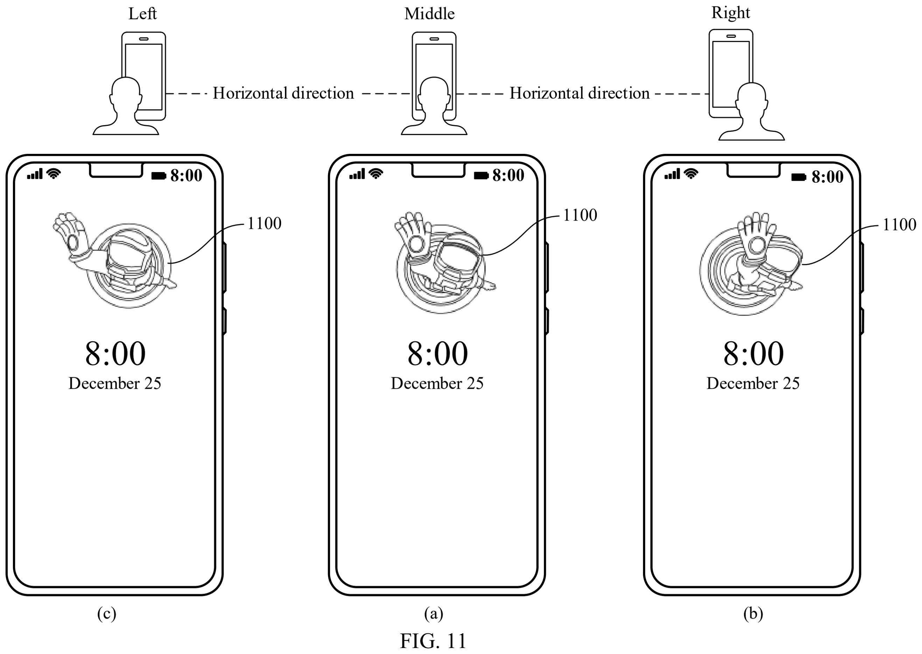

Refer to (a) in FIG. 11. The electronic device is currently in the screen-off mode. After a front-facing camera disposed on the electronic device captures an image, the electronic device performs human face/human eye detection on the image, to determine that the human face/human eye is located at a central position of the image. In this case, the human face/human eye is located at the central position relative to the display. Therefore, an orientation of the naked-eye 3D object 1100 on the display matches a current position of the human face/human eye. As shown in the figure, the naked-eye 3D object 1100 faces the user in a forward direction, achieving an effect that the naked-eye 3D object 1100 is oriented towards the user.

Refer to (b) in FIG. 11. After the head of the user moves to the right, the front-facing camera disposed on the electronic device captures an image, and the electronic device performs human face/human eye detection on the image, to determine that the human face/human eye is located at a position on the right of the center of the image. In this case, the human face/human eye is located at the position on the right of the center relative to the display. Therefore, the orientation of the naked-eye 3D object 1100 on the display is deflected to the right, and a changed orientation matches the current position of the human face/human eye, achieving an effect that the orientation of the naked-eye 3D object 1100 changes with the user position change, and is always oriented towards the user.

Refer to (c) in FIG. 11. After the head of the user moves to the left, the front-facing camera disposed on the electronic device captures an image, and the electronic device performs human face/human eye detection on the image, to determine that the human face/human eye is located at a position on the left of the center of the image. In this case, the human face/human eye is located at the position on the left of the center relative to the display. Therefore, the orientation of the naked-eye 3D object 1100 on the display is deflected to the left, and a changed orientation matches the current position of the human face/human eye, achieving an effect that the orientation of the naked-eye 3D object 1100 changes with the user position change, and is always oriented towards the user.

Because the naked-eye 3D object has a three-dimensional display effect, and pictures from different angles can be presented based on a human face orientation change, thereby achieving a naked-eye 3D visual effect.

FIG. 11 is described by using an example in which the orientation of the human face changes in the horizontal direction. This is not limited in this embodiment of this application. For example, when the orientation of the human face changes in another direction, the naked-eye 3D object may also correspondingly rotate in the direction based on the change, to achieve a dynamic change effect of being oriented towards a current user direction.

In some embodiments of this application, when the screen-off display object is the naked-eye 3D object, after the display is lit up, the naked-eye 3D object may be directly displayed on the display. In some other embodiments, after the display is lit up, an entrance animation of the naked-eye 3D object may be first displayed, to display an entrance effect of the naked-eye 3D object, thereby improving vividness and interest of the display effect.

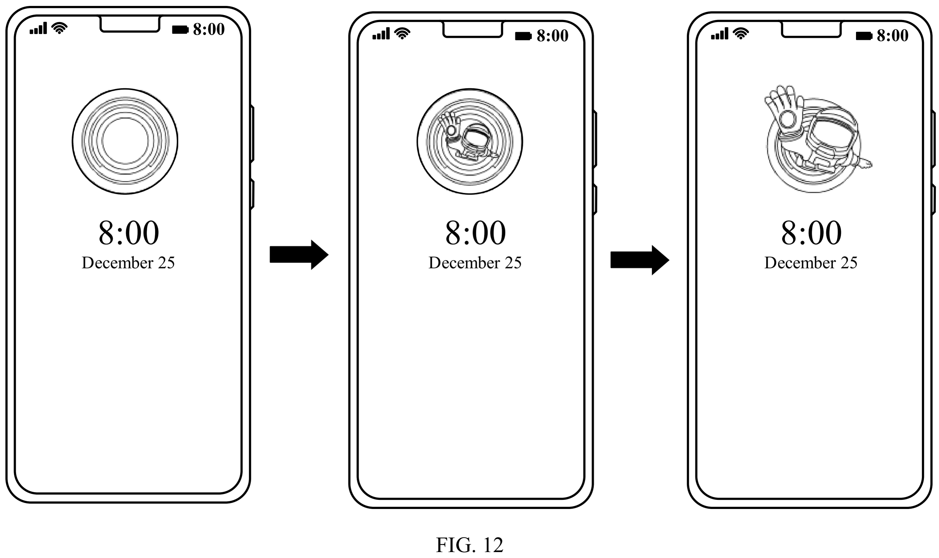

The naked-eye 3D object shown in FIG. 2 is used as an example. FIG. 12 is an example of a diagram of several frames in the entrance animation of the naked-eye 3D object. As shown in FIG. 12, an effect that the naked-eye 3D object "spaceman" gradually emerging from a capsule can be presented by using the entrance animation. Based on the entrance animation, when the human eye of the user gazes at the display of the electronic device, a hatch appears in the picture, and the "spaceman" shuttles out from the hatch. Then, when gazing at the display of the electronic device, the user shakes the electronic device or swings the human face. A current picture changes based on a position of the human face, and a picture associated with a corresponding viewing angle is presented, thereby achieving a naked-eye 3D effect.

### Scenario 5

In Scenario 5, an example in which a text is displayed by using a cube is used to describe a scenario in which the cube dynamically changes with a user position change to display text content on different surfaces of the cube.

The text may be displayed on each surface of the cube, and the text may include one or more types of information such as a date, time, weather, and a signature. In this example, an example in which date and signature information is displayed on three surfaces of the cube is used for description.

Refer to FIG. 13. After a front-facing camera disposed on the electronic device captures an image, the electronic device performs human face/human eye detection on the image, to determine an orientation of the human face/human eye. When the human face/human eye is located at a central position relative to the display, a surface of the cube on the display is oriented towards the user, and a text displayed on the surface is a date, for example, "SUM SEP 07" shown in the figure.

After the head of the user moves to the left, the front-facing camera disposed on the electronic device captures an image, and the electronic device performs human face/human eye detection on the image, to determine that the human face/human eye is located at a position on the left of the center of the image. In this case, the human face/human eye is located at the position on the left of the center relative to the display. Therefore, the orientation of the cube on the display is deflected to the left, and a part of another surface of the rotated cube is displayed. As the head of the user continues to move to the left, the orientation of the cube on the display continues to be deflected to the left, and a left surface of the rotated cube is fully displayed. As shown in FIG. 13, the left surface of the cube is fully displayed, the left surface is oriented towards the user, and the text displayed on the left surface is personalized signature information, for example, "JUST LOVE LIFE" shown in the figure.

Similarly, in a process in which the head of the user moves to the right, as the head of the user moves, the cube gradually rotates to the right, so that the right surface is gradually displayed, and the user can see the signature information displayed on the right surface.

Optionally, as shown in FIG. 13, each surface of the cube may be partially hollowed out. For example, a text part may be hollowed out. For example, a part occupied by a text displayed on each surface in FIG. 13 is hollowed out, desktop wallpaper located at a lower layer may be presented by using this part, and other parts are opaque. For another example, on a surface of the cube, a part occupied by the text is opaque, a remaining part is hollowed out, and the desktop wallpaper located at the lower layer may be presented by using the hollowed-out part.

FIG. 13 is described by using an example in which the orientation of the human face changes in the horizontal direction. This is not limited in this embodiment of this application. For example, when the orientation of the human face changes in another direction, the text object may also correspondingly rotate in a direction opposite to the change based on the change, to display text content on the corresponding surface.

Based on Scenario 5, the following effects can be achieved: In the screen-off mode, when the human eye of the user gazes at the electronic device, a large-character poster picture including current time and date information appears in the picture of the display, and the font is in a hollow-out state, so that the desktop wallpaper currently set by the user can be displayed transparently. When gazing at the electronic device, the user shakes the electronic device or swings the human face. A current picture changes based on a position of the human face, and hidden information of a corresponding viewing angle is presented.

Optionally, after the user performs an unlock operation and the display is unlocked, the electronic device exits the screen-off display mode, the display of the electronic device is lit up in full screen, and the desktop and the desktop wallpaper are displayed. In this process, the electronic device may switch from the screen-off mode to a screen-on mode by using a one-shot visual effect, and display the desktop and the desktop wallpaper of the electronic device. In this embodiment of this application, because the text object in the screen-off mode is displayed as a hollow-out effect, a part of the desktop wallpaper may be exposed, so that the part of the desktop wallpaper can also be seen in the screen-off mode. Then, a transition animation from the screen-off mode to the screen-on mode can be used to implement smooth, coherent, and natural transition to the screen-on mode, thereby achieving a "one-shot" display effect.

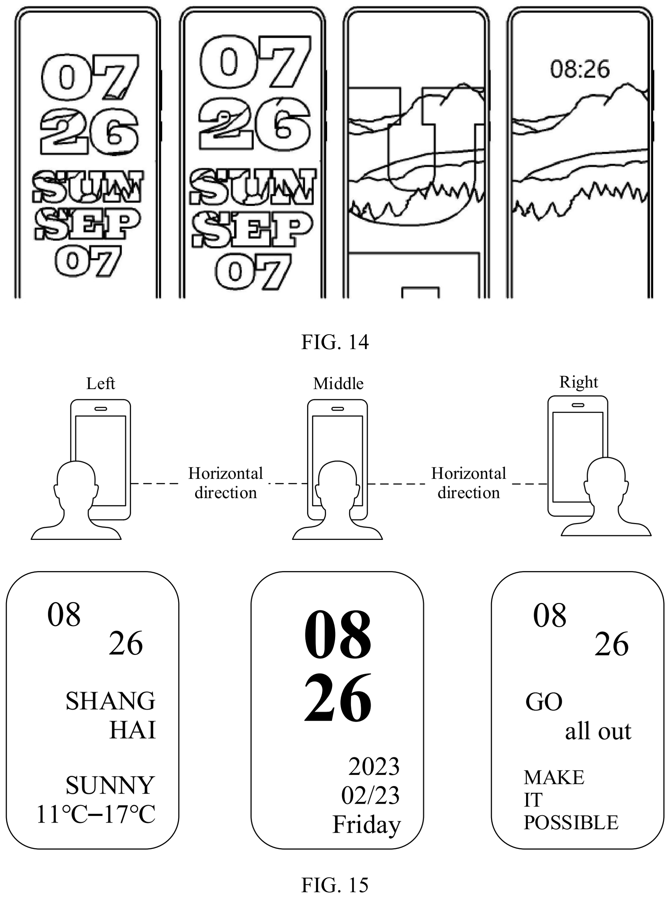

FIG. 14 shows an example of a transition animation for switching from a screen-off mode to a screen-on mode according to an embodiment of this application, to achieve a "one-shot" display effect. An effect of the transition animation is as follows: A current picture on the display is gradually zoomed in at a position of a central point, and a lower-layer desktop wallpaper is increasingly displayed until the lower-layer desktop wallpaper is fully displayed, then switching to the screen-on mode. Optionally, in the transition animation, transparency of a part that is not hollowed out and that is in the text object may be gradually increased, to achieve a display effect that a desktop background is gradually clear from being invisible, thereby making the transition process from the screen-off mode to the screen-on mode smoother and more natural.

FIG. 15 shows an example of another dynamic display effect in Scenario 5. A display effect of the animation is similar to that shown in FIG. 13, and a difference lies in that a style of the text object is different from a style of the text object in FIG. 13. The text object shown in FIG. 15 is displayed in a two-dimensional effect. The text object has different states, and different text content is displayed in different states. For example, date information and time information are displayed in a state (for example, text content displayed by the text object when the human face of the user is in a middle orientation in the figure), date information, position information, and weather information are displayed in another state (for example, text content displayed by the text object when the human face of the user is in the left orientation in the figure), and date information and personalized signature information are displayed in another state (for example, text content displayed by the text object when the human face of the user is in the right orientation in the figure). Text objects in different states may be displayed based on different orientations of the human face/human eye of the user. FIG. 15 is described by using an example in which the orientation of the human face changes in the horizontal direction. This is not limited in this embodiment of this application. For example, when the orientation of the human face changes in another direction, the text object may also display text content in a corresponding state based on the change.

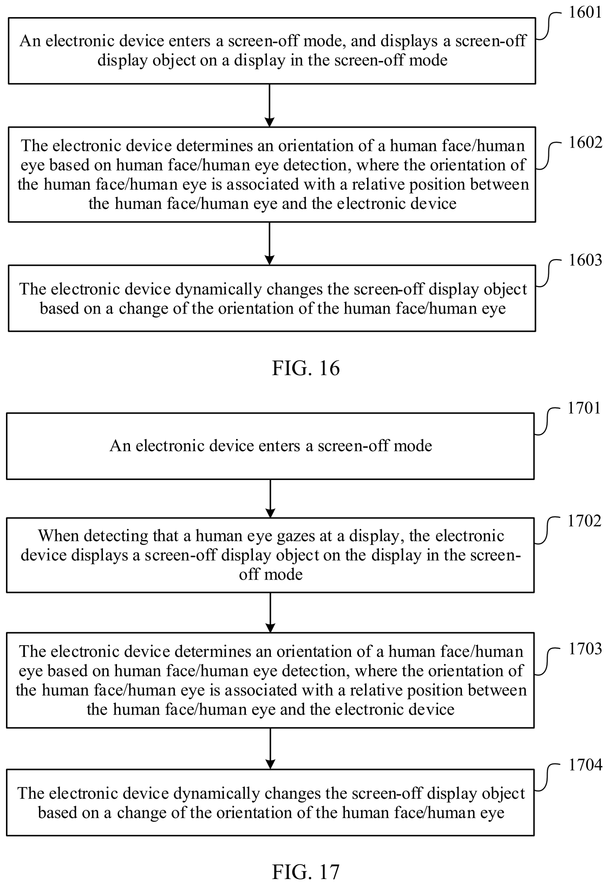

With reference to FIG. 16, the following describes a display method in a screen-off mode according to an embodiment of this application.

FIG. 16 is a schematic flowchart of the display method in the screen-off mode according to an embodiment of this application. The procedure may be performed by the electronic device shown in FIG. 6 or FIG. 7, or may be performed by a functional module, a processor, or a chip in the electronic device. The following procedure is described by using the electronic device as an execution body. As shown in the figure, the procedure may include the following steps.

Step 1601: The electronic device enters the screen-off mode, and displays a screen-off display object on a display in the screen-off mode.

In this embodiment of this application, a screen-off function may be enabled in advance, and the screen-off display object displayed in the screen-off mode may be set. In this way, when the electronic device meets a screen-off condition (for example, the electronic device is not used within specified time), the electronic device may automatically enter the screen-off mode, and display the screen-off display object on the display in the screen-off mode. For an example of enabling the screen-off mode and setting the screen-off display object displayed in the screen-off mode, refer to FIG. 4. Details are not described herein again.

In this embodiment of this application, the screen-off display object is not limited. For example, the screen-off display object may be signature information, an emoticon, a picture, a virtual image, a naked-eye 3D object, or a text object.

Step 1602: The electronic device determines an orientation of a human face/human eye based on human face/human eye detection, where the orientation of the human face/human eye is associated with a relative position between the human face/human eye and the electronic device.

In a possible implementation, a front-facing camera or a first sensor disposed on the electronic device may capture information, to obtain detection information for human face/human eye detection. The "first sensor" herein represents one or more types of sensors. Information detected by the sensor may be used for human face/human eye detection. For example, the sensor may be an infrared detection sensor, and the infrared detection sensor may capture an infrared image for human face detection. The front-facing camera is used as an example. After the front-facing camera captures an image, the image may be transferred to the processor, and the processor executes a human face/human eye detection algorithm to perform human face/human eye detection on the image. For an implementation method of human face/human eye detection, refer to the foregoing description.

Optionally, the front-facing camera or the first sensor on the electronic device may capture information based on a specified period.

As described above, in this embodiment of this application, one or more of the following information may be obtained through human face/human eye detection: A position of the human face/human eye relative to the display of the electronic device, a rotation angle of the human face/human eye relative to the display of the electronic device, and a depth of field of the human face/human eye relative to the display of the electronic device. Optionally, the orientation of the human face/human eye is determined by combining the foregoing plurality of types of information, so that precision can be further improved.

Step 1603: The electronic device dynamically changes the screen-off display object based on a change of the orientation of the human face/human eye.

In this embodiment of this application, when the electronic device does not move, a position change (for example, movement) of the user, rotation or shaking of the head of the user, or the like may cause a change in the orientation of the human face/human eye, or may cause a change in the relative position between the human face/human eye and the display of the electronic device. When the user does not move, a position change, rotation, shaking, or the like of the electronic device may cause a change in the orientation of the human face/human eye, or may cause a change in the relative position between the human face/human eye and the display of the electronic device. Regardless of a change caused by any reason, in this embodiment of this application, the screen-off display object dynamically changes accordingly.

Optionally, because the electronic device may periodically capture an image and perform human face/human eye detection on the image, in a process in which the orientation of the human face/human eye changes, a change of the orientation may be obtained in time, and a change of an emotion presented by the human face/human eye may be further obtained. Therefore, display of the screen-off display object can be updated in time, to achieve an effect of dynamically changing the screen-off display object.

In a possible implementation, the screen-off display object includes a first component, and the first component represents an eye. In step 1603, when the orientation of the human face changes, the electronic device may change the first component in the screen-off display object (for example, change a position, a state, or a shape of the first component) based on the change, so that a display position or a line-of-sight direction of changed first component matches a current orientation of a human face or a human eye. Optionally, the first component includes an eyeball in the eye. Correspondingly, the electronic device may change a display position of the eyeball in the eye based on a change of the orientation of the human face/human eye. In this way, the line of sight of the screen-off display object changes with the change of the orientation of the human face/human eye of the user, making the user feel that the screen-off display object always gazes at the user.

For example, an animation may be played, so that an effect that the line of sight of the screen-off display object changes with the change of the orientation of the human face/human eye of the user is smoother. For example, the human face changes from a first orientation to a second orientation. In this process, the electronic device may play a first animation, where the first animation includes N frames (N is an integer greater than 1). Each of the N frames includes the screen-off display object. In the N frames, a display state of the screen-off display object in a first frame matches the first orientation, a display state of the screen-off display object in a last frame matches the second orientation, and a display state of the screen-off display object in a second frame to an (N-1)^{th} frame matches a middle orientation in a transition process from the first orientation to the second orientation. A smooth dynamic change effect can be obtained by playing the first animation.

A possible example may be Scenario 1 described above (for details, refer to FIG. 8).

Optionally, the screen-off display object may further include a second component, and the second component represents an emotion. In step 1503, the electronic device may further determine, based on human face or human eye detection, an emotion presented by the human face or the human eye, and update the second component based on the emotion (for example, update a position, a state, or a shape of the second component), so that the emotion presented by the screen-off display object matches a current emotion presented by the human face or the human eye. A possible example may be Scenario 2 (for details, refer to FIG. 9(a) to FIG. 9(d)) or Scenario 3 described above (for details, refer to FIG. 10).

In another possible implementation, the screen-off display object includes a three-dimensional object, and an example of the three-dimensional object may be shown in FIG. 2. In step 1603, when detecting that the orientation of the human face or the human eye changes, the electronic device may change an orientation of the three-dimensional object accordingly, so that a changed orientation of the three-dimensional object matches the orientation of the human face or the human eye, thereby achieving a naked-eye 3D dynamic display effect. A possible example may be Scenario 4 described above (for details, refer to FIG. 11).

In another possible implementation, the screen-off display object includes a text object, the text object is used to display at least two texts, and when the text object is rotated, a part of the at least two texts is displayed and/or a part of the at least two texts is hidden. An example of the text object may be shown in FIG. 3. In step 1503, when the electronic device detects that the orientation of the human face or the human eye changes, the text object is rotated to present a hidden text. For example, when the electronic device detects that the orientation of the human face or the human eye is the first orientation, the text object is rotated in a direction opposite to the first orientation to present the hidden text.

For example, the text object is a three-dimensional object, a first text is displayed on a first surface of the three-dimensional object, and a second text is displayed on a second surface of the three-dimensional object. When the electronic device detects that the orientation of the human face or the human eye changes from the first orientation to the second orientation, the text object is rotated from a first angle to a second angle; or when the electronic device detects that the orientation of the human face or the human eye changes from the second orientation to the first orientation, the text object is rotated from the second angle to the first angle. At the first angle, the first surface of the text object is displayed and the second surface is hidden. At the second angle, the second surface of the text object is displayed and the first surface is hidden.

Optionally, the text object is displayed in a hollow-out effect, and a part of an image of desktop wallpaper of the electronic device is exposed from a hollow-out part of the text object.

A possible example may be Scenario 5 described above (for details, refer to FIG. 13 or FIG. 15).

In this embodiment of this application, when the electronic device meets the condition for switching to a screen-on mode (for example, the user lights up the screen by touching the screen), and the display of the electronic device is unlocked, the electronic device switches from the screen-off mode to the screen-on mode. In the screen-on mode, a desktop and a desktop background are displayed on the display of the electronic device.

Optionally, in this embodiment of this application, in a process of switching from the screen-off mode to the screen-on mode, the electronic device may play a transition animation, to achieve a one-shot visual effect, and switch from the screen-off mode to the screen-on mode, to improve viewing smoothness, and provide the user with better visual experience.

For example, the text object is displayed as a hollow-out effect. The electronic device receives an unlock operation of the user. For example, the unlock operation of the user may be a screen touch operation or another type of operation. This is not limited in this embodiment of this application. After the electronic device receives the unlock operation of the user, as a response, the electronic device may switch from the screen-off mode to the screen-on mode by using the one-shot visual effect, and display the desktop and the desktop wallpaper of the electronic device in the screen-on mode. Because the text object has a hollow-out display effect, a part of the desktop wallpaper is exposed in the hollow-out part of the text object. By playing the transition animation, more parts of the desktop wallpaper may be gradually exposed until the desktop wallpaper is fully exposed, so as to improve smoothness. A possible example may be Scenario 5 described above (for details, refer to FIG. 14).

In some embodiments of this application, when detecting that the orientation mode of the human face/human eye changes, the electronic device may dynamically generate a screen-off display object that matches the current orientation, to dynamically display the screen-off display object.

In a possible implementation, the electronic device may generate, based on an AI capability and the screen-off display object set by the user and the current orientation of the human face/human eye, the screen-off display object that matches the current orientation, and perform display refreshing. An implementation of generating the screen-off display object based on the AI capability may be specifically: using the screen-off display object set by the user and current orientation information of the human face/human eye as input information, and inputting the screen-off display object and the current orientation information of the human face/human eye into an AI-based image generation model, to generate the new screen-off display object.

In another possible implementation, the screen-off display object may include a plurality of layers that are sequentially superimposed, and the screen-off display object may be displayed by superimposing the plurality of layers. When the electronic device detects that the orientation mode of the human face/human eye changes, the electronic device may change positions of some of the plurality of layers, or move the some layers, achieving an effect of dynamically changing the screen-off display object.

The emoticon shown in FIG. 1 is used as an example. The emoticon may be formed by superimposing four layers from top to bottom: glasses, an eyeball, an eye white, and a mouth. The electronic device may separately calculate, based on the change of the orientation of the human face/human eye, a movement direction and a movement amount of a layer at which the glasses are located, and a movement direction and a movement amount of a layer at which the eyeball is located, and then move, based on a calculation result, the layer at which the glasses are located and the layer at which the eyeball is located. In this way, a new emoticon formed by superimposing the current four layers can match the current orientation of the human face/human eye.

In another possible implementation, the screen-off display object may include a plurality of layers that are sequentially superimposed, and the screen-off display object may be displayed by superimposing the plurality of layers. When detecting that the orientation mode of the human face/human eye changes, the electronic device may replace a corresponding layer in the plurality of layers with a new layer, achieving an effect of dynamically changing the screen-off display object.

The emoticon shown in FIG. 1 is used as an example. The emoticon may be formed by superimposing four layers from top to bottom: glasses, an eyeball, an eye white, and a mouth. The electronic device may determine, based on a change of an emotion presented by the human face/human eye, a change from a sad emotion to a happy emotion, and the electronic device replaces the layer at which the mouth is located with a new layer, that is, replaces an original downwardly bent mouth with an upwardly bent mouth. In this way, a new emoticon formed by superimposing the current four layers can match the current emotion presented by the human face/human eye.

It may be understood that the foregoing merely provides several methods for dynamically updating the screen-off display object as examples. This is not limited in this embodiment of this application.

FIG. 17 is a schematic flowchart of a display method in a screen-off mode according to an embodiment of this application. The procedure may be performed by the electronic device shown in FIG. 6 or FIG. 7, or may be performed by a functional module, a processor, or a chip in the electronic device. The following procedure is described by using the electronic device as an execution body. As shown in the figure, the procedure may include the following steps.

Step 1701: The electronic device enters a screen-off mode.

In this embodiment of this application, a screen-off function may be enabled in advance, and an EOD function may be enabled. In this way, when the electronic device meets a screen-off condition (for example, the electronic device is not used within specified time), the electronic device may automatically enter the screen-off mode.

Step 1702: When detecting that a human eye gazes at a display, the electronic device displays a screen-off display object on the display in the screen-off mode.

In this embodiment of this application, after the electronic device enters the screen-off mode, the electronic device displays the screen-off display object on the display when detecting that the human eye gazes at the display. A manner of setting the screen-off display object may be the same as that described above.

Optionally, the electronic device may capture an image by using a front-facing camera, and the electronic device may determine, by executing an eyeball tracking algorithm for the image, whether the human eye gazes at the display of the electronic device.

Step 1703: The electronic device determines an orientation of a human face/human eye based on human face/human eye detection, where the orientation of the human face/human eye is associated with a relative position between the human face/human eye and the electronic device.

For a specific implementation of this step, refer to related content in FIG. 16.

Step 1704: The electronic device dynamically changes the screen-off display object based on a change of the orientation of the human face/human eye.

For a specific implementation of this step, refer to related content in FIG. 16.

The procedure shown in FIG. 17 may achieve a dynamic change display effect of the screen-off display object via "non-contact triggering". Specifically, a behavior of gazing at the display by the user may trigger display of the screen-off display object, and subsequently, a dynamic change of the screen-off display object may be triggered by shaking the electronic device, or by shaking or moving the head.

In some embodiments of this application, a processing operation of human face/human eye detection performed in the screen-off mode and a processing operation of dynamically displaying the screen-off display object based on the change of the orientation of the human face/human eye may be performed by a low-power AI processor (or referred to as a low-power AI chip), to reduce power consumption of the electronic device.

In the foregoing embodiment of this application, in the screen-off mode, the screen-off display object may dynamically change with a current emotion change of the user, a gaze orientation change, a change in an angle of holding the electronic device, and the like, to meet a personalized requirement of the user. This expands an interesting interaction scenario in the screen-off mode, allows the user to view rich and delicate interaction effects in the picture, and brings better visual experience to the user. In addition, power consumption and a screen burning risk in the screen-off mode can be effectively reduced.

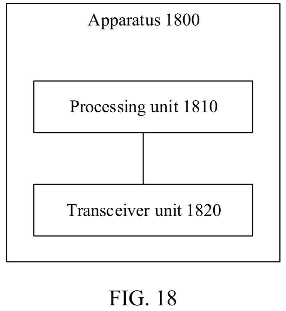

FIG. 18 is a diagram of a possible structure of an apparatus according to an embodiment of this application. The apparatus may be configured to implement functions of the device in the method embodiments, and therefore can also achieve beneficial effects of the method embodiments. In this embodiment of this application, the apparatus may be the electronic device shown in FIG. 6, or may be a module (for example, a chip) applied to a corresponding device.

As shown in FIG. 18, an apparatus 1800 includes a processing unit 1810 and a transceiver unit 1820. The apparatus 1800 is configured to implement functions of the terminal device or the sorting system in the method embodiment shown in FIG. 16 or FIG. 17.

Optionally, the transceiver unit may include a receiving unit and a sending unit. The receiving unit may receive information, for example, signaling or data. The sending unit may send information under control of a processing unit, for example, send signaling or data.

When the apparatus 1800 is configured to implement a function of the electronic device in the method embodiment shown in FIG. 16, the processing unit 1810 is configured to control the electronic device to enter a screen-off mode, and display a screen-off display object on a display in the screen-off mode; and the processing unit 1810 determines an orientation of a human face or a human eye based on human face or human eye detection, where the orientation is associated with a relative position between the human face or the human eye and the electronic device; and dynamically changes the screen-off display object based on a change of the orientation of the human face or the human eye.

When the apparatus 1800 is configured to implement a function of the electronic device in the method embodiment shown in FIG. 17, the processing unit 1810 is configured to: control the electronic device to enter a screen-off mode; when it is detected that a human eye gazes at the display, display a screen-off display object on the display in the screen-off mode; determine an orientation of a human face or the human eye based on human face or human eye detection, where the orientation is associated with a relative position between the human face or the human eye and the electronic device; and dynamically change the screen-off display object based on a change of the orientation of the human face or the human eye.

For more detailed descriptions of the processing unit 1810 and the transceiver unit 1820, directly refer to the related descriptions in the method embodiments shown in FIG. 16 or FIG. 17. Details are not described herein again.

An embodiment of this application further provides an apparatus. The apparatus includes a processor and an interface circuit. The processor and the interface circuit are coupled to each other. It can be understood that the interface circuit may be a transceiver or an input/output interface. Optionally, the transceiver may include a receiver and a transmitter. Optionally, the apparatus may further include a memory, configured to: store instructions executed by the processor, or store input data required for running instructions by the processor, or store data generated after the processor runs instructions. When the apparatus is configured to implement the method shown in FIG. 16 or FIG. 17, the processor is configured to implement the functions of the foregoing processing unit, and the interface circuit is configured to implement the functions of the foregoing transceiver unit.

When the apparatus is a chip used in an electronic device, the chip is configured to implement functions of the electronic device in the foregoing method embodiments. The chip receives information from another module (for example, a radio frequency module or an antenna) in the electronic device, where the information is sent by a network device to the electronic device; or the chip sends information to another module (for example, a radio frequency module or an antenna) in the electronic device, where the information is sent by the electronic device to a network device.

It can be understood that the processor in embodiments of this application may be a central processing unit (Central Processing Unit, CPU), or may be another general-purpose processor, a digital signal processor (Digital Signal Processor, DSP), an application-specific integrated circuit (Application Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor or any regular processor or the like.

This application further provides another example of the apparatus. The apparatus includes at least one processor and at least one memory. The at least one processor is coupled to the at least one memory. The at least one memory is configured to store instructions. When the instructions are executed by the at least one processor, the communication apparatus is enabled to perform the method in the foregoing embodiment.

The method steps in embodiments of this application may be implemented in hardware, or may be implemented in software instructions that may be executed by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to a processor, so that the processor can read information from the storage medium and write information into the storage medium. The storage medium may alternatively be a component of the processor. The processor and the storage medium may be disposed in an ASIC. In addition, the ASIC may be located in the network device or the terminal. The processor and the storage medium may alternatively exist in the network device or the terminal as discrete components.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer programs or instructions. When the computer programs or instructions are loaded and executed on a computer, the procedures or functions in embodiments of this application are all or partially executed. The computer may be a general-purpose computer, a special-purpose computer, a computer network, a network device, user equipment, or another programmable apparatus. The computer program or instructions may be stored in a computer-readable storage medium, or may be transmitted from a computer-readable storage medium to another computer-readable storage medium. For example, the computer program or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or there is a logic conflict, terms and/or descriptions in different embodiments are consistent and may be mutually referenced, and technical features in different embodiments may be combined into a new embodiment based on an internal logical relationship thereof.

In this application, at least one means one or more, and a plurality of means two or more. "And/or" describes an association relationship between associated objects and indicates that three relationships may exist. For example, A and/or B may indicate the following cases: Only A exists, both A and B exist, and only B exists, where A and B may be singular or plural. In the text descriptions of this application, the character "/" represents an "or" relationship between the associated objects. In a formula in this application, the character "/" represents a "division" relationship between the associated objects. "Including at least one of A, B, and C" may represent: including A; including B; including C; including A and B; including A and C; including B and C; and including A, B, and C.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A display method in a screen-off mode, applied to an electronic device having a display, and comprising:
entering the screen-off mode, and displaying a screen-off display object on the display in the screen-off mode;
determining an orientation of a human face or a human eye based on human face or human eye detection, wherein the orientation is associated with a relative position between the human face or the human eye and the electronic device; and
dynamically changing the screen-off display object based on a change of the orientation of the human face or the human eye.

2. A display method in a screen-off mode, applied to an electronic device having a display, and comprising:
entering the screen-off mode;
when it is detected that a human eye gazes at the display, displaying a screen-off display object on the display in the screen-off mode;
determining an orientation of a human face or the human eye based on human face or human eye detection, wherein the orientation is associated with a relative position between the human face or the human eye and the electronic device; and
dynamically changing the screen-off display object based on a change of the orientation of the human face or the human eye.

3. The method according to claim 1 or 2, wherein the screen-off display object comprises a first component, and the first component represents an eye; and
dynamically changing the screen-off display object based on the change of the orientation of the human face or the human eye comprises:
when the orientation of the human face or the human eye changes, changing the first component based on the change, so that a display position or a line-of-sight direction of changed first component matches the orientation of the human face or the human eye.

4. The method according to claim 3, wherein the first component comprises an eyeball in the eye; and
changing the first component based on the change comprises: changing a display position of the eyeball in the eye based on the change.

5. The method according to claim 3 or 4, wherein the screen-off display object comprises a second component, and the second component represents an emotion; and
the method further comprises:
determining, based on human face or human eye detection, an emotion presented by the human face or the human eye, and updating the second component, so that the emotion presented by the screen-off display object matches the emotion presented by the human face or the human eye.

6. The method according to claim 5, wherein determining, based on human face or human eye detection, the emotion presented by the human face or the human eye comprises:
performing human face or human eye detection by using an artificial intelligence AI capability, to determine the emotion presented by the human face or the human eye.

7. The method according to any one of claims 1 to 6, wherein the change of the orientation of the human face or the human eye comprises: the human face or the human eye changes from a first orientation to a second orientation; and
dynamically changing the screen-off display object based on the change of the orientation of the human face or the human eye comprises:
playing a first animation, wherein the first animation comprises N frames, N is an integer greater than 1, and each of the N frames comprises the screen-off display object; and in the N frames, a display state of the screen-off display object in a first frame matches the first orientation, a display state of the screen-off display object in a last frame matches the second orientation, and a display state of the screen-off display object in a second frame to an (N-1)^{th} frame matches a middle orientation in a transition process from the first orientation to the second orientation.

8. The method according to any one of claims 1 to 7, wherein the screen-off display object comprises a three-dimensional object; and
dynamically changing the screen-off display object based on the change of the orientation of the human face or the human eye comprises:
when the orientation of the human face or the human eye changes, changing an orientation of the three-dimensional object accordingly, so that a changed orientation of the three-dimensional object matches the orientation of the human face or the human eye.

9. The method according to claim 1 or 2, wherein the screen-off display object comprises a rotatable text object, the text object is used to display at least two texts, and when the text object is rotated, a part of the at least two texts is displayed and/or a part of the at least two texts is hidden; and
dynamically changing the screen-off display object based on the change of the orientation of the human face or the human eye comprises:
when the orientation of the human face or the human eye changes, rotating the text object to present a hidden text.

10. The method according to claim 9, wherein when the orientation of the human face or the human eye changes, rotating the text object to present the hidden text comprises:
when the orientation of the human face or the human eye is a first orientation, rotating the text object in a direction opposite to the first orientation to present the hidden text.

11. The method according to claim 9 or 10, wherein the text object is a three-dimensional object, a first text is displayed on a first surface of the three-dimensional object, and a second text is displayed on a second surface of the three-dimensional object; and
when the orientation of the human face or the human eye changes, rotating the text object to present the hidden text comprises:
when the orientation of the human face or the human eye changes from the first orientation to a second orientation, rotating the text object from a first angle to a second angle; or
when the orientation of the human face or the human eye changes from the second orientation to the first orientation, rotating the text object from the second angle to the first angle, wherein
the first surface of the text object is displayed at the first angle, and the second surface of the text object is displayed at the second angle.

12. The method according to any one of claims 9 to 11, wherein the text object is displayed in a hollow-out effect, and a part of an image of desktop wallpaper of the electronic device is exposed from a hollow-out part of the text object; and
the method further comprises:
in response to an unlock operation, switching from the screen-off mode to a screen-on mode by using a one-shot visual effect, and displaying a desktop and the desktop wallpaper of the electronic device.

13. The method according to any one of claims 1 to 12, further comprising:
obtaining information detected by the electronic device by using a front-facing camera or a first sensor; and
performing human face or human eye detection based on the detected information.

14. The method according to any one of claims 1 to 13, wherein the change of the orientation of the human face or the human eye is caused by a movement of a user or a movement of the electronic device.

15. An apparatus, comprising a memory, a processor, and a display apparatus, wherein the memory is configured to store a computer program, and the processor is configured to read the computer program, to enable the apparatus to implement the method according to any one of claims 1 to 14.

16. A computer-readable storage medium, wherein the computer-readable storage medium stores a computer program, and when the computer program is executed by a computer, the computer is enabled to implement the method according to any one of claims 1 to 14.

17. A computer program product, comprising computer-readable instructions, wherein when the computer program product runs on a computer, the computer is enabled to perform the method according to any one of claims 1 to 14.

18. A chip, wherein the chip comprises a processor and a data interface, and the processor reads, through the data interface, instructions stored in a memory, to perform the method according to any one of claims 1 to 14.
